# EUROPEAN PATENT APPLICATION

(11) **EP 1 505 077 A1**
(43) Date of publication of application: **09.02.2005**
(21) Application number: 04018675.1
(22) Date of filing: 06.08.2004
(51) Int. Cl.: C08B 30/02

(54) **Alkaline wet milling of corn grain**

(30) Priority: 06.08.2003 US 635147
(71) Applicant: National Starch and Chemical Investment Holding Corporation, New Castle, Delaware 19720 (US)
(72) Inventor: Lee, Christine C., 08550 New Jersey (US); Green, Vincent R., 07063 New Jersey (US); Altieri, Paul A., 08558 New Jersey (US); Bindzus, Wolfgang, 08844 New Jersey (US)
(74) Representative: Hagemann, Heinrich, Dr. rer. nat., Dipl.-Chem.

(57) **Abstract**

A method of organic processing corn grain to produce starch wherein corn grain is initially steeped with sodium carbonate at a pH of about 8.5 to 12 to provide a softened grain followed by wet mill processing to provide a starch composition.

## Description

### BACKGROUND OF THE INVENTION

This invention involves a method for organic processing corn grain to produce a starch composition using a wet milling operation wherein the corn grain is initially steeped in alkaline sodium carbonate solution prior to wet milling.

The extraction of starch from corn grain has long been carried out in wet milling processes using an acidic steeping method that utilizes sulfur dioxide (SO₂). Although the use of alkaline steeping agents, mostly sodium hydroxide, has been suggested as well, the acidic steeping method using sulfur dioxide has always been recognized as the preferred method. This is because of the efficiency of the bisulfite ion in softening the protein matrix and the effective prevention of the growth of microorganisms over long steeping times. Further the exposure of corn grain to alkaline steeping conditions may result in partially or fully gelatinized starch which is known to occur at high pH, in particular in combination with elevated temperatures. It was also observed that alkaline conditions can dissolve the pericarp and components of the outer shell of the grain. In such a case, special means are required to remove the partially or completely soluble components from the grain.

Eckoff et al, "Comparison Between Alkali and Conventional Corn Wet-Milling: 100-g Procedures", Cereal Chemistry, Vol. 76, 1999, pp. 96-99, describes a process for alkaline wet milling of corn grain using sodium hydroxide solution and elevated temperature (90°C). This process dissolves the pericarp which can be removed by mechanical means such as brushing or gentle abrasive agitation. After soaking and debranning, the corn is cracked, slurried and ground using traditional processing to separate the fiber and protein from starch.

A continuous process for refining whole grain corn to obtain corn starch using a combined dry-wet milling process is described in U. S. Patent 4,181,748 issued to V. P. Chwalek et al on January 1, 1980. In this procedure the wet milling step can involve either an acid medium of sulfur dioxide or an alkali medium of sodium hydroxide.

Another disclosure of starch production from com is found in U.S. Patent 4,517,022 issued to R. D. Harvey on May 14, 1985. In this process corn is dry-milled, dehulled, degerminated and then slurried using alkaline conditions preferably with sodium sulfite and then subjected to high intensity mixing in order to remove or isolate the starch from protein.

While the methods described above are useful in providing starch from com grain, an improved method is sought wherein organic processing is used without the environmental concerns of using sulfur dioxide and without the need for additional means or equipment to remove the pericarp and other impurities.

### SUMMARY OF THE INVENTION

Now, in accordance with this invention, a method of organic processing com grain to produce starch has been developed. More particularly, corn grain is organically processed by initially steeping with sodium carbonate at a pH of about 8.5 up to about 12 wherein the grain is softened followed by wet mill processing to provide a starch composition.

### DETAILED DESCRIPTION OF THE INVENTION

This invention relates to the production of starch from corn using an improved alkaline wet milling procedure. This method which involves the use of sodium carbonate as a steeping agent provides significant advantages over the current commercial sulfur dioxide procedure and other known procedures for producing starch from corn grain. It has been found that the use of sodium carbonate as described herein, softens the grain but does not dissolve or damage the pericarp and therefor the grain can be further processed using traditional wet milling techniques without the need for modification or use of mixing and other special equipment. Furthermore, this method allows for operation over a wide range of steeping times without affecting or changing starch characteristics. This improved method meets the requirements of organic processing in that it involves the use of approved naturally occurring materials. Additionally, this method eliminates the use of SO2 and the environmental concerns associated with such use.

Corn or corn grain is the starting feed material used and this includes the waxy or amylose containing varieties. The com can be naturally occurring or regular dent corn or a hybrid corn such as waxy maize or high amylose containing com, i.e. corn containing 40% or more of amylose content. Genetically modified corn can also be used.

The steeping agent used in this method is an alkaline carbonate and more particularly sodium carbonate or potassium carbonate with sodium carbonate being preferred. Any carbonate such as alkali metal or alkaline earth metal carbonates can be used as steeping agent as long as they have similar pH strength to sodium carbonate as defined herein. The steeping agent is used at a treatment level of from about 0.1 to 6% by weight, based on the weight of starting corn grain material, preferably 0.5 to 1.5% and at a pH of about 8.5 up to about 12. More particularly, the pH of the steeping solution is from about 9 to 12 and preferably from about 10 to 11.5. The treatment level can vary depending on the ability to reach the desired pH. The temperature of the steeping solution can vary from about 30 to 60°C(86 to 140°F) and more particularly from about 45 to 55°C(113 to 131°F) and the steeping time can vary over a wide range of about 1 to 72 hours. At lower temperatures longer steeping times will be needed while if the temperature is too high some gelatinization may take place. Also at lower temperatures the com is not as soft and the separation is less efficient. By maintaining the desired alkaline conditions, the grain is softened but the pericarp is not solubilized making the insoluble corn grain components (germ, fiber, protein and starch) readily separable and recoverable. Also the starch does not swell or gelatinize during processing and the quality of the recovered starch is at a high level.

Following the steeping procedure, the grain can be processed by wet milling steps to recover the starch. This includes steps such as coarse grinding, germ separation, fine grinding, fiber separation, gluten/starch separation and starch purification.

It is further significantly noted that the use of the steeping procedure of this invention allows granular starch to be produced with different levels of bulk density without affecting other starch properties such as crystallinity, granular integrity or viscosity. Such a phenomena is not known for other steeping methods using acidic or alkaline steeping agents. In particular, as described in Example 3, the steeping method of this invention provides the opportunity to produce granular starch with lower bulk density. Lower bulk density starches may provide advantages in certain applications such as compression or in adsorption of liquid components.

The following examples further illustrate and exemplify the method of this invention. In the examples all parts are by weight and temperatures are in degrees celsius unless otherwise noted.

### EXAMPLE 1

Waxy corn grain (224 lbs.) was steeped using aqueous alkaline solutions of sodium carbonate at a 1:4 (grain to water) ratio. Table 1 summarizes the alkaline steep conditions performed on a pilot plant wet milling system and provides the grain quality after steeping. Experiments were conducted at a range of 13 to 72 hours. The temperature was kept constant at a level of 49 to 50°C(120 to 122°F). Alkaline treatment levels varied from 0.5 to 5.7% sodium carbonate creating a pH range of 10.6 to 11.4.

**Table 1:**

| **Summary of Alkaline Steep Conditions Using Sodium Carbonate** | | | | | |
|---|---|---|---|---|---|
| **Steep Conditions** | | | | **Grain** | **Pericarp** |
| Sodium Carbonate (%) | Temp. °C(°F) | Time (hrs.) | Soln. pH | | |
| 0.5 | 50(122) | 36 | 10.6 | Soft | Dark orange, Intact, fibrous |
| 1.0 | 50(122) | 36 | 10.6 | Soft | Dark orange, intact, fibrous |
| 1.0 | 49(120) | 72 | 11.2 | Soft | Dark, orange, intact, fibrous |
| 5.7 | 50(122) | 45 | 11.4 | Soft | Dark orange, intact, fibrous |

The data in Table 1 shows that after steeping with sodium carbonate the waxy com grain was soft and the pericarp shell remained fibrous and intact. Within the range of steeping conditions tested, the pericarp did not start to dissolve or transform from a fibrous structure to a soft gel type structure.

Following steeping, the waxy corn grain was further processed to separate and recover the starch using the wet milling procedure as described below in Example 3.

### EXAMPLE 2

In this example experiments were performed on a laboratory scale to evaluate and compare steeping of waxy corn grain with sodium hydroxide and sodium carbonate. The alkaline steeping conditions are given in Table 2. The experiments used a grain to water ratio of 1:3.

**Table 2:**

| **Waxy Corn Grain Quality After Steeping with Sodium Hydroxide and Sodium Carbonate** | | | | |
|---|---|---|---|---|
| **Steep Conditions** | | | | **Pericarp** |
| Reagent (%) | Temp. ° C(°F) | Time (hrs.) | Soln. pH | |
| 6% Sodium hydroxide | 57(135) | 9 min. | 13.5 | Clear, dissolved, soft gel |
| 2% Sodium hydroxide (1) | 90(194) | 5 min. | 13.7 | Clear, dissolved soft gel |
| 0.5% Sodium carbonate | 50(122) | 36 hrs. | 10.6 | Clear, dark orange, intact, fibrous |
| 5.7% Sodium carbonate | 50(122) | 45 hrs. | 11.4 | Clear, dark orange, intact, fibrous |

| | | | | |
|---|---|---|---|---|
| (1) Waxy corn grain steeped at lower levels of sodium hydroxide (1%) resulted with pericarp of characteristics between a fibrous and dissolved state. Since the pericarp was exposed to dilute concentration of sodium hydroxide, the pericarp retained a semi- fibrous shell which required mechanical means (agitation or use of a hydrobrasor pump) to remove and detach the pericarp from the grain. | | | | |

After steeping, there were notable differences in the appearance of the pericarp between the waxy corn grain that was steeped in sodium hydroxide solution and the waxy corn grain that was steeped in sodium carbonate solution. Steeping waxy corn grain in 2% and 6% sodium hydroxide solution resulted in a higher pH range (13.5 to 13.7) compared to steeping waxy com grain in 0.5 to 5.7% sodium carbonate (pH 10.6 to 11.4). When using sodium hydroxide, over the range of steeping temperatures used, a higher pH constituting higher alkaline strength, dissolved a portion of the pericarp and outer layer of the kernel. This created a clear, adhesive soft gel surrounding the kernel endosperm. Steeping waxy com grain with sodium hydroxide dissolved part of the tip cap, germ and lower portions of the endosperm (Table 2). Waxy corn grain steeped in 0.5 to 5.7% sodium carbonate solution operated at a lower pH range (pH 10.6 to 11.4). The pericarp retained its fibrous shell and did not dissolve. Steeping with sodium carbonate visibly changed the outer shell from a transparent no-color shell to a transparent dark orange. Solubilization of the tip cap, germ or lower portions of the endosperm was not detected. The grain was soft and not dissolved and had the desired properties for the subsequent wet milling steps. Following steeping, the waxy corn grain was further processed to separate and recover the starch using the wet milling procedures as described in Example 3.

### EXAMPLE 3

This example shows the comparison of the efficiency and starch qualities of the process for corn grain of this invention with the acid wet milling process (SO₂). The steeping conditions uscd were an acidic steep with sulfur dioxide (SO₂) at 0.19% and alkaline steep with sodium carbonate (Na₂CO₃) at 0.5 to 1.0%.

After steeping, the softened waxy com grain was subjected to the following wet milling procedure. The softened com grain was coarse ground in order to separate and recover grain components into its germ, fiber, protein and starch components. The waxy corn grain was ground using a twin disc mill to crack open the corn grain and press out whole and intact pieces of germ seeds from the kernels. Once the free germ seed was suspended in slurry form, a hydroclone was used to extract and recover the germ. The remaining material contained components of starch, fiber and protein and was fine ground to reduce particle size. The fiber was extracted, isolated and recovered by means of physical separation based on particle size. A SWECO screen was used to collect the larger particle size (i.e. fiber) while the smaller particle size (i.e. starch and protein) filtered through the screen. The last step was to obtain waxy corn starch slurry with residual levels of protein from starch slurry containing high levels of protein. Dorr Clones were used to separate and extract protein in order to yield the purified waxy corn starch product.

Material balance data are shown below in Table 3. Since starch yield was based on dry weight, the total extractable starch yield was calculated by measuring the total slurry volume and total solids. Protein on waxy corn starch was calculated by using a LECO Nitrogen Analyzer to measure nitrogen levels in starch samples. The data shows that waxy corn starch that was extracted from alkaline sodium carbonate steeped grain had a yield and protein level that was similar to waxy corn starch extracted from grain that was steeped using acidic conditions. This shows that by replacing acidic steep conditions with alkaline sodium carbonate steep conditions, the product yield and purity are similar. It is noted that for the pilot plant equipment used in this study, a protein content on starch that approaches 1% is typical for waxy corn starches.

**Table 3:**

| **Material Balance of Acidic and Alkali Wet Milled Waxy Grain** | | | |
|---|---|---|---|
| **Steep Conditions** | | | |
| **Type Run**: | **Acidic** | **Alkaline** | **Alkaline** |
| Reagent Type | Sulfur Dioxide | Sodium Carbonate | Sodium Carbonate |
| Reagent Amount (%) | 0.19 | 0.5 | 1.0 |
| Time (hrs.) | 45 | 13 | 72 |
| Temperature (°F) | 127 | 122 | 120 |
| **Total Starch Product** | | | |
| Starch Yield (lbs/bushel) | 28.34 | 27.00 | 29.50 |
| Insoluble Starch content (%) | 99.0 | 99.1 | 99.2 |
| Insoluble protein Content | 0.98 | 0.91 | 0.76 |

Starch quality was characterized by viscosity, microscopy, filtration, DSC (Differential Scanning Calorimetry) and bulk density. Alkaline sodium carbonate wet milled waxy corn starch samples were compared to acidic wet milled waxy com starch samples as a mode of reference. The starch extracted from alkaline sodium carbonate steeped waxy corn grain was found to be comparable to starch extracted from acidic steeped waxy corn grain in the tests described below. Furthermore, it was observed that at varying alkaline sodium carbonate steeping conditions, the alkaline wet milled starch exhibited different levels of bulk density.

The wet milled waxy com starch samples were measured for viscosity using a Viscograph-Amylograph (a.ka. Brabender) with a 350 mg cartridge. Samples of starch and water slurry of 5.4% solids were subjected to a controlled heating rate of 1.5°C/min. at a starting temperature of 50°C, a maximum of 92°C, a temperature hold for 15 minutes and a cooling rate of 1.5°C/min. to 50°C. Using this procedure, waxy com starch has typically a minimum peak viscosity of 600 BU (Brabender Units) and when the starch cook is cooled to 50°C the viscosity range is typically from 200-400 BU. The data in Table 4 below, shows that both, waxy corn starch samples extracted from acidic steeped grain and waxy corn starch extracted from alkaline sodium carbonate steeped grain, met the requirements outlined above and show every similar viscosity data.

**Table 4:**

| **Viscosity Data of Alkaline and Acidic Wet Milled Waxy Corn Starch** | | | | | |
|---|---|---|---|---|---|
| **Type Run** | **Steep Conditions** | | | **Peak Visc (BU)** | **Visc@50°C** |
| | Reagent Quantity (%) | Temp. °C(°F) | Time (hrs.) | Target = Min. 600BU | Target = 200-400 BU |
| Alkaline | 0.5 Na₂CO₃ | 50(122) | 36 | 660 | 250 |
| Alkaline | 1.0 Na₂CO₃ | 49(120) | 72 | 710 | 290 |
| Alkaline | 5.7 Na₂CO₃ | 50(122) | 45 | 730 | 305 |
| Acidic | 0.19 SO₂ | 52.7(127) | 45 | 670 | 315 |
| Acidic | 0.19 SO₂ | 52.7(127) | 45 | 660 | 300 |

Shown through differential scanning calorimetry (DSC) data, acidic and alkaline sodium carbonate wet milled waxy corn starches provide similar levels of crystallinity (Table 5). The DSC data were obtained by a DSC scan at 25% moisture from 10°C to 160°C at a heating rate of 10°C/min.

**Table 5:**

| **DSC Data** | | | | | | |
|---|---|---|---|---|---|---|
| **Type Run** | **Steep Conditions** | | | **DSC Results** | | |
| | **Reagent Quant(%)** | **Temp. °C(°F)** | **Time (hrs.)** | **Delta H (J/g)** | **Onset (°C)** | **Peak (°C)** |
| Alkaline | 0.52 | 50(122) | 36 | 20.5 | 66.1 | 73.9 |
| Acidic | 0.19 SO₂ | 52.7(127) | 45 | 20.6 | 68.4 | 75.6 |

Waxy corn starches that were extracted from acidic and alkaline sodium carbonate steeped waxy corn grain were analyzed on a Scanning Electron Microscope (SEM) at a magnitude of x 1000. Scanned samples were prepared by dusting granules on a conductive carbon tab and gold coated. For both wet milling procedures, the starch granules were found to have similar granular structure and no irregular granular shapes or damaged granular structures were detected.

A filtration method was used as an indirect indicator to determine if the extracted starches exhibited properties of partially gelatinized starches. The presence of swollen starch granules is known to affect the ability to filter water through a wet starch cake. Therefor, the presence of partially gelatinized starch granules results in longer filtration times known as lower filtration rates. Swollen starch granules may be caused by prolonged exposure of the grain to alkaline solutions. Waxy corn slurries obtained from alkaline sodium carbonate and acidic wet milled waxy corn grain were filtered by vacuum filtration to measure the filtration rate. The sample slurry was based on 65 g of anhydrous starch. Buchner funnel size of 4.5 inch diameter and filter paper of 90 mm diameter (Whatman grade #1) was used. The vacuum pump drew a suction pressure of 25 in. Hg to filtrate water in a 500 mL graduated cylinder. The amount of time to collect 200 mL of filtrate water was recorded for the alkaline and acidic wet milled waxy corn starch samples with the results given in Table 6. The data show comparable filtration rates for all starches tested. Therefor, it is concluded that waxy corn starch extracted form alkaline sodium carbonate steeped waxy corn grain did not swell or partially dissolve under the steeping conditions used.

**Table 6:**

| **Starch Filtration Rates** | | | | |
|---|---|---|---|---|
| **Type Run** | **Steep Conditions** | | | **Time period to Collect 200mL Filtrate water (sec)** |
| | Reagent Quant. (%) | Temp. °C(°F) | Time(hrs.) | |
| Alkaline | 0.5 Na₂CO₃ | 50(122) | 36 | 130 |
| Alkaline | 1.0 Na₂CO₃ | 49(120) | 72 | 145 |
| Acidic | 0.19 SO₂ | 52.7(127) | 45 | 140 |

The loose bulk density of waxy corn starch processed from alkaline and acidic steeped grain is shown in Table 7. Under alkaline conditions the grain was steeped at sodium carbonate treatment levels ranging from 0.5 to 5.7%. Acidic steeping was performed at 0.19% sulfur dioxide, Waxy corn starch extracted from the steeped grain was filled into a 100mL graduated cylinder. The weight and volume was recorded to calculate the loose bulk density value (gram/mL). The cylinder was gently tapped to settle the material slightly. The results are given below in Table 7.

**Table 7:**

| **Loose Bulk Density** | | | |
|---|---|---|---|
| **Steeping Method** | **Reagent Concentration** | | **Bulk Density (g/mL)** |
| | **Na**_{**2**}**CO**_{**3**}**(%)** | **SO**_{**2**}**(%)** | |
| Alkaline | 0.5 | -- | 0.63 |
| Alkaline | 1.0 | -- | 0.54 |
| Alkaline | 5.7 | -- | 0.48 |
| Acidic | -- | 0.19 | 0.58 |

The data in Table 7 show that the loose bulk density of granular waxy corn starch was affected by the amount of sodium carbonate used during the steeping process. This appears to be a unique characteristic of the process and its product. While other properties of the granular starch such as crystallinity, granular integrity and viscosity remained unchanged, the data in Table 7 show that the amount of sodium carbonate used during steeping can be adjusted to achieve a desired level of loose bulk density that is comparable to starch steeped under acidic conditions. Higher levels of sodium carbonate provide the opportunity to reduce the loose bulk density of the starch.

## Claims

1. A method of organic processing corn grain to produce starch wherein the corn grain is steeped in sodium carbonate or potassium carbonate solution at a pH of about 8.5 to 12 to soften the grain followed by wet milling to recover the starch composition.

2. The method of Claim 1 wherein sodium carbonate is used as the steeping agent.

3. The method of Claim 1 or 2 wherein the pH is from about 9 to 12.

4. The method of any one of Claims 1 to 3 wherein the steeping is carried out at a temperature of about 30 to 60°C.

5. The method of any one of Claims 1 to 4 wherein sodium carbonate is used at a treatment level of from about 0.1 to 6% by weight, based on the weight of corn grain.

6. The method of any one of Claims 1 to 5 wherein the pH is from about 10 to 11.5.

7. The method of any one of Claims 4 to 6 wherein the steeping is carried out at a temperature of about 30 to 60°C.

8. The method of any one of Claims 1 to 7 wherein sodium carbonate is used at a treatment level of from about 0.1 to 6% by weight, based on the weight of corn grain.

9. The method of any one of Claims 4 to 6 wherein the steeping is carried out at a temperature of about 45 to 55°C.

10. The method of any one of Claims 1 to 9 wherein sodium carbonate is used at a treatment level of about 0.1 to 6% by weight, based on the weight of corn grain.

11. The method of any one of Claims 1 to 10 wherein the corn grain is naturally occurring corn or hybrid corn selected from the group consisting of waxy maize or high amylose corn.

12. The method of any one of Claims 1 to 11 wherein the pH is from about 9 to 12 and the steeping is carried out at a temperature of from about 30 to 60°C.

13. The method of any one of Claims 1 to 12 wherein the wet milling procedure includes the steps of coarse grinding, germ separation, fine grinding, fiber separation gluten/starch separation and starch purification.

14. The method of any one of Claims 1 to 13 wherein sodium carbonate is used as the steeping agent, the pH is from about 9 to 12 and the steeping is carried out at a temperature of from about 30 to 60°C.

15. A starch composition wherein the starch is produced from corn grain by steeping the corn grain in sodium carbonate or potassium carbonate solution at a pH of about 8.5 to 12 to soften the grain followed by wet milling to recover the starch composition.

16. The starch composition of claim 15 wherein sodium carbonate is the steeping agent and the pH is from about 9 to 12.

17. The starch composition of Claim 15 or 16 wherein the pH is from about 10 to 11.5 and the steeping is carried out at a temperature of from about 30 to 60°C.

18. The starch composition of Claim 17 wherein the steeping is carried out at a temperature of from about 45 to 55°C.
